Europäisches Patentamt

European Patent Office

Office européen des brevets

(19)

(11) Veröffentlichungsnummer: **0 299 147 B1**

# EUROPÄISCHE PATENTSCHRIFT

(45) Veröffentlichungstag der Patentschrift: **27.12.91**

(21) Anmeldenummer: **88105758.2**

(22) Anmeldetag: **12.04.88**

(51) Int. Cl.⁵: **E05C 17/18**, E05C 17/20,
F16C 11/04

(54) Türfeststeller, insbesondere für Kraftwagentüren.

(30) Priorität: **15.07.87 DE 3723424**

(43) Veröffentlichungstag der Anmeldung:
**18.01.89 Patentblatt 89/03**

(45) Bekanntmachung des Hinweises auf die
Patenterteilung:
**27.12.91 Patentblatt 91/52**

(84) Benannte Vertragsstaaten:
**DE ES FR GB IT NL SE**

(56) Entgegenhaltungen:
**EP-A- 0 139 509**
**DE-A- 3 144 904**

(73) Patentinhaber: **ED. Scharwächter GmbH &
Co.KG.**
**Hohenhagenerstrasse 26-28**
**W-5630 Remscheid 1(DE)**

(72) Erfinder: **Tölle, Karl-Heinz**
**Reinshagen Strasse 78**
**Wuppertal(DE)**
Erfinder: **Heinemann, Heinz-Walter**
**Kellersfeld 16**
**Wuppertal(DE)**
Erfinder: **Brockhaus, Jürgen**
**Ibacherstrasse 57**
**Remscheid(DE)**
Erfinder: **Fiebrich, Wolfgang**
**Am Nocken 14**
**Halver 2(DE)**

(74) Vertreter: **Schön, Theodor, Patent- und Zivilingenieur**
**Sonnleiten 7**
**W-8311 Moosthenning 1(DE)**

EP 0 299 147 B1

## Beschreibung

Die Erfindung bezieht sich auf einen Türfeststeller, insbesondere für Kraftwagentüren, mit einer am einen Türanordnungsteil, Tür oder Türholm schwenkbar angeschlagenen, ein Haltergehäuse am anderen Türanordnungsteil durchsetzenden, über ihre Länge hin mit quer zu ihrer Längserstreckung ausladenden Ausbauchungen versehenen Türhaltestange, bei dem die Türhaltestange an einem am einen Türanordnungsteil befestigten, durch ein einteiliges Formteil gebildeten Träger mittels eines Niet- oder Schraubenbolzens fliegend gelagert ist, wobei die Türhaltestange koaxial zu ihrer Schwenklagerung durch eine gegen den Kopf des Niet-oder Schraubenbolzens abgestützte Feder federbelastet und der Niet- oder Schraubenbolzen in der Augenbohrung des Trägers drehsicher festgelegt ist.

Bei dem Türfeststeller nach der EP-A-0 259 540, die nach dem Anmeldungstag veröffentlicht worden ist, wird zur Erlangung einer spielfreien Lagerung der Türhaltestange auf den die Schwenklagerachse ihrer Schwenklagerung bildenden Niet- oder Schraubenbolzen vorgeschlagen, eine der beiden miteinander zusammenwirkenden Lagerflächen, entweder die Augenbohrungsfläche der Türhaltestange oder aber insbesondere, weil leichter herstellbar, die der Augenbohrung der Türhaltestange zugeordnete Lagerfläche des Niet- oder Schraubenbolzens mit einer Umfangsprofilierung, insbesondere einer Kordel zu versehen. Diese Maßnahme ist an sich durchaus geeignet, eine Schwenklagerung spielfrei zu gestalten, jedoch bilden Schwenklagerungen für Türhaltestangen von Türfeststellern von Kraftwagentüren insofern eine Besonderheit, als sich aus dem bestimmungsgemäßen Betrieb des Türfeststellers beim Öffnen und Schließen der Fahrzeugtür sehr hohe, in der Schwenklagerung des Türhaltebandes aufzufangende Kraftspitzen ergeben, die zu einer starken Abnutzung der Lagerfläche und damit auch einer eventuell vorgesehenen Profilierung führen, so daß letztendlich bei langzeitigem Betrieb des Türfeststellers die Spielfreiheit der Schwenklagerung der Türhaltestange nicht gewährleistbar ist. Andererseits führt aber auch bereits ein geringes Spiel in der Schwenklagerung der Türhaltestange bereits zu erheblichen Knack- oder Knarrgeräuschen, die besonders vernehmlich zu Tage treten, da die Türanordnungsteile, insbesondere aber die Tür als Resonanzkörper wirken.

Der Erfindung liegt daher die Aufgabe zugrunde, einen Türfeststeller nach dem Oberbegriff des Anspruches 1 dahingehend zu verbessern, daß bei einfacher Ausführung der Bauteile das Entstehen eines Spieles zwischen der Augenbohrung der Türhaltestange und dem das Schwenklager bildenden Schaftteil des Niet- oder Schraubenbolzens vermieden bzw. die Schwenklagerung der Türhaltestange entweder durch selbsttätig wirksam werdende oder aber betätigbare Mittel selbst bei langzeitigem Betrieb des Türfeststellers spielfrei gehalten werden kann.

Diese Aufgabe wird erfindungsgemäß dadurch gelöst, daß die Türhaltestange unter axial zur Schwenklagerung gerichteter Federbelastung über nach Art einer Konuskupplung axial und radial wirkende Mittel selbstzentrierend und spielfrei an den glatte Laufflächen aufweisenden Schaftteil des die Schwenklagerachse bildenden Niet- oder Schraubenbolzens gelagert ist. Insbesondere sind dabei die axial und radial wirkenden Mittel zur spielfreien Schwenklagerung der Türhaltestange durch wechselseitig an deren Augenbohrung und am Schaftteil des Niet- oder Schraubenbolzens ausgebildete konische Erweiterungen dargestellt. In Verbindung mit der Anordnung einer zur Schwenklagerung der Türhaltestange koaxial wirkenden Belastungsfeder wird hierdurch sichergestellt, daß die Schwenklagerung der Türhaltestange auch über einen langzeitigen Betrieb des Türfeststellers hin selbsttätig spielfrei bleibt.

In Verbindung mit der Anordnung einer zum Niet- oder Schraubenbolzenschaft koaxial wirkenden Belastungsfeder ist zweckmäßigerweise die Länge der konischen Erweiterung der Augenbohrung der Türhaltestange kleiner, als der maximale Federweg der Belastungsfeder, derart, daß die konische Erweiterung auch unter Berücksichtigung von Abnutzungserscheinungen ständig mit der konischen Erweiterung des Niet- oder Bolzenschaftes in Anlage gehalten und somit jeglicher Stil in der Schwenklagerung der Türhaltestange selbsttätig beseitigt wird. Die konische Erweitung des Schaftteiles des Niet- oder Schraubenbolzens schließt bei einer fliegenden Lagerung der Türhaltestange zweckmäßigerweise an den Kopf des Niet- oder Schraubenbolzens an und ist in axialer Richtung länger ausgebildet, als die zugehörige Erweiterung der Augenbohrung der Türhaltestange, so daß die Nachstellmöglichkeit der Schwenklagerung der Türhaltestange erhalten bleibt. Hand in Hand damit ist erfindungsgemäß weiterhin vorgesehen, daß die Belastungsfeder unter Abstützung gegen den Träger oder gegen einen Lagerarm eines Lagerbockes an der konischen Erweiterung der Augenbohrung gegenüberliegenden Seitenfläche der Türhaltestange angreift und daß insbesondere die Belastungsfeder als Tellerfeder ausgebildet ist.

Gemäß einer bevorzugten Einzelausgestaltung ist vorgesehen, daß der Schaftteil des Nietbolzens als Bundschaft ausgebildet ist und mit seinem im Durchmesser verringerten Längenteil eine vorhergehend in den Träger eingenietete, eine Führung für die als Tellerfeder ausgebildete Belastungsfeder bildende Buchse durchsetzt, was den Vorteil hat, daß bei der Montage des Türfeststellers die als Tellerfeder ausgebildete Belastungsfeder zunächst auf die Buchse aufgesetzt und dann erst die Türhaltestange über den zugehörigen, die Schwenklagerachse bildenden Nietbolzen mit dem Träger verbunden werden kann.

Dabei kann durchaus vorgesehen sein, daß die Buchse einen Teil der Lagerfläche der Schwenklagerung der Türhaltestange bildet.

Nach einem weiteren Merkmal der Erfindung kann auch vorgesehen sein, daß anstelle eines Nietbolzens ein Schraubenbolzen verwendet wird, wobei dann der Schraubenbolzen als Bundbolzen ausgebildet und mittels einer Schraubenmutter gegen den Träger verspannt sowie mittels einer Umfangsprofilierung drehsicher in einer entsprechenden Bohrung des Trägers festgelegt ist.

Bei Anordnung der Schwenklagerung der Türhaltestange in einem zwei die Türhaltestange zwischen sich aufnehmende Lagerarme aufweisenden Lagerbock kann in einer Weiterbildung der Erfindung vorgesehen sein, daß die Belastungsfeder als Klammerfeder ausgebildet ist und deren Federarm der konischen Erweiterung der Augenbohrung der Türhaltestange gegenüberliegend angeordnet sowie gegen den einen Lagerarm des Lagerbockes abgestützt ist.

Eine besondere Weiterbildung der Erfindung besteht darin, daß einer zu deren Augenbohrung konzentrischen kalottenförmigen Ausnehmung in der einen Seitenfläche der Türhaltestange eine am Kopf des einen zylindrischen Schaftteil aufweisenden Niet-oder Schraubenbolzens abgestützte und zentrierte gewölbte Tellerfeder zugeordnet ist, wobei die Tellerfeder in Verbindung mit der kalottenförmigen Ausnehmung in der Seitenfläche der Türhaltestange die axial und radial wirkenden, selbstzentrierenden Mittel zur Spielfreihaltung der Schwenklagerung der Türhaltestange bilden.

Gemäß einer weiteren Gestaltungsform der Erfindung kann schließlich noch vorgesehen sein, daß bei der Anordnung der Schwenklagerung der Türhaltestange in einem Lagerbock zwei die Türhaltestange zwischen sich aufnehmende Lagerarme eines Lagerbockes mittels einer über eine konische Erweiterung teilweise mit einer konischen Erweiterung der Augenbohrung der Türhaltestange im Eingriff stehenden Schraubenbolzen gegen die einander gegenüber liegenden Seitenflächen der Türhaltestange verspannt sind, wobei der Schraubenbolzen mittels einer Schraubenmutter in den Lagerarmen des Lagerbockes verspannt und beim Auftreten eines Spieles in der Schwenklagerung der Türhaltestange entsprechend nachspannbar ist. Die beiden Lagerarme des Lagerbockes weisen dabei zweckmäßigerweise jeweils ein halbkreisförmiges Querschnittsprofil auf.

Die Erfindung ist in der nachfolgenden Beispielsbeschreibung an Hand einiger in der Zeichnung dargestellter Ausführungsbeispiele im Einzelnen beschrieben.

In der Zeichnung zeigt die

Figur 1 eine Seitenansicht eines Türfeststellers für Kraftwagentüren;

Figur 2 eine Stirnansicht eines Türfeststellers für Kraftwagentüren;

Figur 3 einen Schnitt durch den Türfeststeller gemäß Figur 2 entlang der Linie II-II;

Figur 4 eine Stirnansicht einer anderen Gestaltungsform eines Türfeststellers für Kraftwagentüren;

Figur 5 einen Schnitt durch den Türfeststeller gemäß Figur 4 entlang der Linie V-V;

Figur 6 eine Stirnansicht einer anderen Ausführungsform eines Türfeststellers für Kraftwagentüren;

Figur 7 einen Schnitt durch den Türfeststeller gemäß Figur 6 entlang der Linie VII-VII;

Figur 8 eine Stirnanischt einer anderen Ausführungsform eines Türfeststellers für Kraftwagentüren;

Figur 9 einen Schnitt durch den Türfeststeller gemäß Figur 8 entlang der Linie IX-IX;

Figur 10 eine Stirnansicht einer anderen Ausführungsform eines Türfeststellers für Kraftwagentüren;

Figur 11 einen Schnitt durch einen Türfeststeller gemäß Figur 10 entlang der Linie XI-XI;

Figur 12 eine Stirnansicht einer weiteren Ausführungsform eines Türfeststellers für Kraftwagentüren;

Figur 13 einen Schnitt durch den türfeststeller gemäß Figur 12 entlang der Linie XIII-XIII.

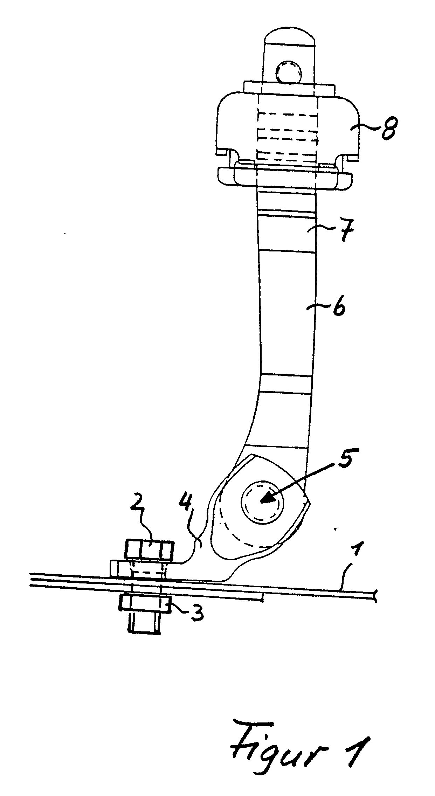

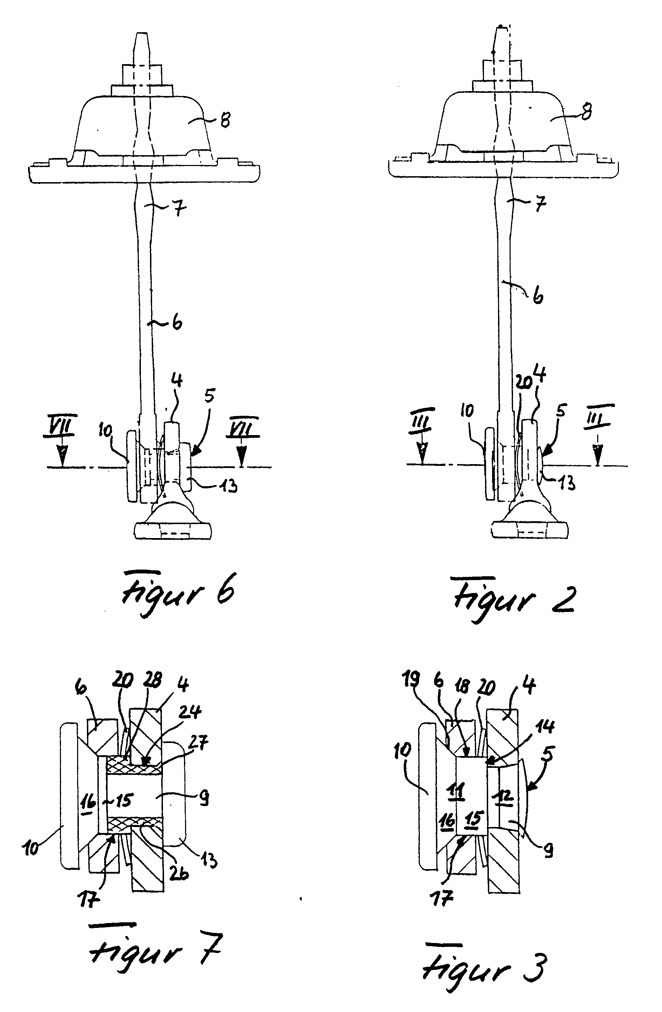

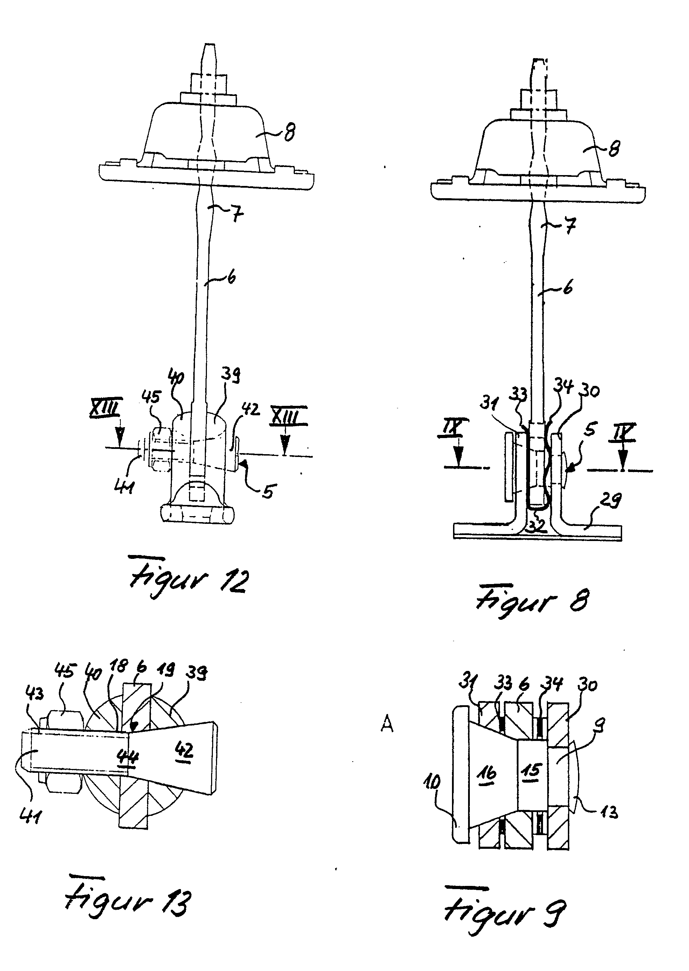

Am einen Türanordnungsteil 1 ist vermittels eines Schraubenbolzens 2 und einer Mutter 3 ein Träger 4 für das Schwenklager 5 einer Türhaltestange 6, die andernends quer zu ihrer Längserstreckung gerichtete Ausbauchungen 7 aufweist und ein Haltergehäuse 8 an einem nicht im Einzelnen gezeigten Seitentüranordnungsteil durchgreift, befestigt. Bei dem in den Figuren 2 und 3 sowie 6 bis 11 dargestellten Ausführungsbeispiel ist die Schwenklagerung 5 durch einen Nietbolzen 9 dargestellt, der einen Kopf 10, einen ersten Schaftteil 11, einen zweiten Schaftteil 12 und ein Nietteil 13 aufweist. Der Nietbolzen 9 besitzt neben seinem Kopf 10 zwei abgestufte Schaftteile 11 und 12, wobei der Schaftteil 12 einen geringeren Durchmesser aufweist und eine Bohrung im Träger 4 durchgreift. Der Nietbolzen 9 liegt dabei mit einem Bund 14 an der Vorderseite und mit dem Teil 13 an der Rückseite des Trägers 4 an. Der die eigentliche Schwenklagerung bildende Schaftteil 11 des Nietbolzens 9 umfaßt einen zylindrischen Abschnitt 15 und einen an den Kopf 10 anschließenden konischen Abschnitt 16, wobei der konische Abschnitt 16 eine sich zum Kopf 10 hin erstreckende Erweiterung des Nietbolzens 9 bildet. Die Türhaltestange 6 ist ihrerseits mit einer Augenbohrung 17 versehen, die in einem ersten Abschnitt 18 zylindrisch gestaltet ist und in einem zweiten Abschnitt 19 eine konische Erweiterung aufweist. Der die konische Erweiterung aufweisende Abschnitt der Augenbohrung 17 der Türhaltestange 6 ist dem Kopf 10 des Nietbolzens zugewandt und weist in axialer Richtung eine Tiefe auf, die kleiner ist als der Federweg einer die Schwenklagerung 5 in axialer Richtung beaufschlagenden Belastungsfeder 20. Die Belastungsfeder 20 ist bei dem in den Figuren 2 bis 7 gezeigten Ausführungsformen als Tellerfeder ausgebildet und greift unter Abstützung gegen den Träger 4 an der diesem zugewandten Seitenfläche der Türhaltestange 6 an, derart, daß sie die konische Erweiterung 19 der Augenbohrung 20 der Türhaltestange 6 mit der konischen Erweiterung 16 des Schaftteiles 11 des Nietbolzens 9 in Anlage hält.

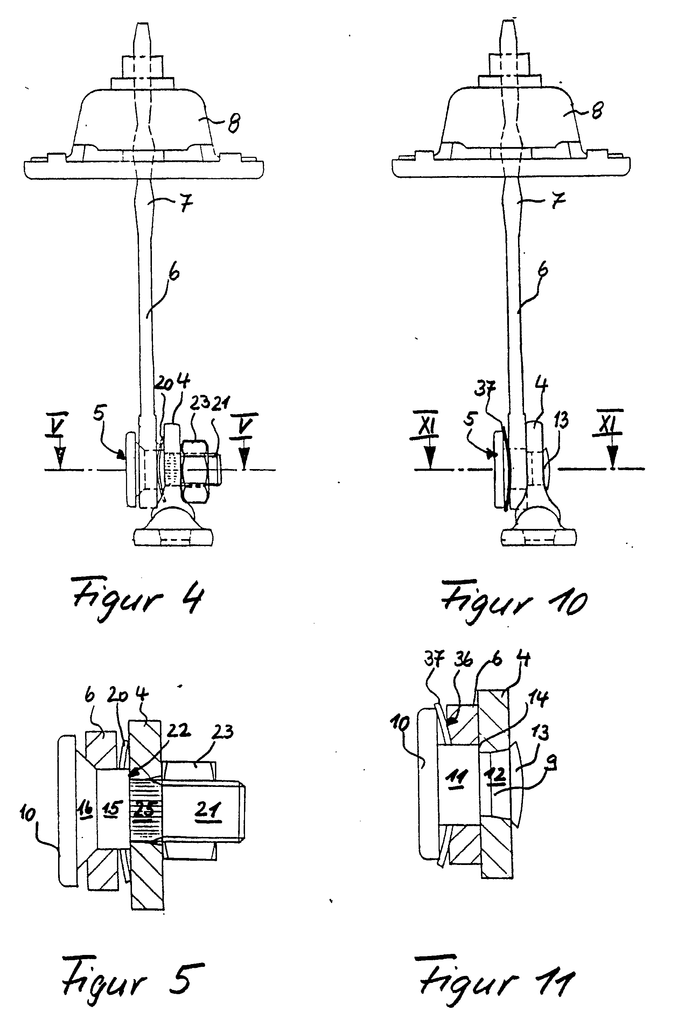

Bei dem in den Figuren 4 und 5 dargestellten Ausführungsbeispiel ist bei im übrigen zu den Figuren 1 bis 3 gleicher Ausgestaltung für die Darstellung der Schwenklagerung 5 ein Schraubenbolzen 21 verwendet, welcher als Bundbolzen ausgebildet ist und mit seinem Bund 22 und der der Türhaltestange 6 zugewandten Seite des Trägers 4 anliegt und gegen dessen gegenüberliegende Seite mittels einer Schraubenmutter 23 verspannt ist. Zur drehsicheren Festlegung in der Bohrung 24 des Trägers 4 ist der Schraubenbolzen 21 über einen Teil seiner Länge hin mit einer Umfangsrändel 25 ausgestattet.

Bei dem in den Figuren 6 und 7 dargestellten Ausführungsbeispiel ist bei im übrigen zu der Ausgestaltung nach den Figuren 1 bis 5 gleicher Ausgestaltung der Schwenklagerung 5 ein Nietbolzen 9 als Bundbolzen ausgebildet und am Träger 4 durch Vermittlung einer Buchse 26 festgelegt. Der Kragen 28 der Buchse 26 dient der als Tellerfeder ausgebildeten Belastungsfeder 20 als Führung, derart, daß nach dem Annieten der Buchse 26 an den Träger 4 zunächst die Belastungsfeder 20 montiert werden kann und erst dann die Türhaltestange 6 vermittels des Nietbolzens 9 an den Träger 4 angeschlagen wird. Der Nietbolzen 9 wird anschließend seinerseits gegen die der Türhaltestange 6 abgewandte Seite des Trägers 4 mittels einer Nietung 13 am Träger 4 befestigt. Die Anwendung der Buchse 26 dient somit insgesamt der Erleichterung der Montage der Schwenklagerung 5. Dabei kann der Kragen 28 der Buchse 26, wie in der Figur 7 dargestellt, in die Augenbohrung 17 der Türhaltestange 6 eingreifen und einen Teil des zylindrischen Schaftteilabschnittes 15 des Nietbolzens 9 ersetzen.

Bei dem in den Figuren 8 und 9 dargestellten Ausführungsbeispiel ist die Schwenklagerung 5 der Türhaltestange 6 in einem Lagerbock 29 aufgenommen, derart, daß die beiden Lagerarme 30 und 31 des Lagerbockes 29 die Türhaltestange 6 zwischen sich aufnehmen. Der Nietbolzen 9 ist dabei mit einer Nietung 13 gegen den einen Lagerarm 30 des Lagerbockes 29 vernietet, während er mit dem eine konische Erweitung aufweisende Schaftteil 16 den anderen Lagerarm 31 des Lagerbockes 29 durchgreift und mit seinem Kopf 10 überragt. Die Belastungsfeder 32 ist dabei als Klammerfeder ausgebildet, die mit ihrem einen Schenkel 33 zwischen den Lagerarm 31 des Lagerbockes 29 und die Türhaltestange 6 eingreift und mit ihrem Federschenkel 34 zwischen die Türhaltestange 6 und den Lagerarm 30 des Lagerbockes 29 eingreift. Der Federschenkel 34 der Klammerfeder 32 ist dabei wellenförmig gestaltet, derart, daß er sich einerseits am Lagerarm 30 des Lagerbockes 29 abstützt und andererseits der diesen Lagerarm zugewandten Seite der Türhaltestange 6 angreift.

Bei dem in den Figuren 10 und 11 dargestellten Ausführungsbeispiel ist die Schwenklagerung 5 wiederum an einem Träger 4 angeordnet, wobei der Nietbolzen 9 mit einem Bund 14 an der einen und mit einer Nietung 13 an der anderen Seite des Trägers 4 anliegt. Der Nietbolzen 9 weist hierbei im Anschluß an den Kopf 10 einen glatten zylindrischen Schaftabschnitt 11 auf, mit dem er die ebenfalls glatte zylindrische Augenbohrung 18 in der Türhaltestange 6 durchsetzt. Die Türhaltestange 6 weist an ihrer den Kopf 10 des Nietbolzens 9 zugewandten Seite eine zur Augenbohrung 18 konzentrische kalottenförmige Vertiefung 36 auf, in welcher eine gegen den Kopf 10 des Nietbolzens 9 abgestützte und zentrierte, ihrerseits als gewölbte Tellerfeder ausgebildete Belastungsfeder 37 einliegt. Die Fläche der Kalotte 36 bildet dabei eine Erweiterung der Augenbohrung 18 der Türhaltestange 6, während die dieser zugewandte Seite der Belastungsfeder 37 eine Erweitung des Nietbolzens 9 bildet.

Bei dem in den Figuren 12 und 13 dargestellten Ausführungsbeispiel ist die Schwenklagerung 5 der Türhaltestange 6 gleichfalls in einem Lagerbock 38 aufgenommen, wobei die beiden Lagerarme 39 und 40 die Türhaltestange 6 zwischen sich aufnehmen. Die Schwenklagerung 5 ist dabei durch einen Schraubenbolzen 41 gebildet, welcher einen insgesamt zylindrisch ausgebildeten Kopfteil 42 und einen mindestens teilweise mit einem Gewinde 43 versehenen zylindrischen Schaftteil 44 aufweist. Dementsprechend besitzt die Augenbohrung 17 der Türhaltestange 6 einen an eine konische Erweiterung 19 anschließenden zylindrischen Abschnitt 18. Der Schraubenbolzen 41 ist vermittels einer Schraubenmutter 45 gegen die Außenseite des Lagerarmes 40 des Lagerbockes 38 verspannt und kann, bei einer Abnutzung der Schwenklagerung 5, nachgestellt werden.

**Patentansprüche**

1. Türfeststeller, insbesondere für Kraftwagentüren, mit einer am einen Türanordnungsteil, Tür oder Türholm, schwenkbar angeschlagenen, ein Haltergehäuse (8) am anderen Türanordnungsteil durchsetzenden, über ihre Länge hin mit quer zu ihrer Längserstreckung ausladenden Ausbauchungen (7) versehenen Türhaltestange (6), bei dem die Türhaltestange (6) an einem am einen Türanordnungsteil befestigten, durch ein einteiliges Formteil gebildeten Träger (4) mittels eines Niet- oder Schraubenbolzens (9) fliegend gelagert ist, wobei die Türhaltestange (6) koaxial zu ihrer Schwenklagerung durch eine gegen den Kopf (10) des Niet- oder Schraubenbolzens abgestützte Feder (20) federbelastet und der Niet- oder Schraubenbolzen in einer Augenbohrung des Trägers (4) drehsicher festgelegt ist, wobei die Türhaltestange (6) unter axial zur Schwenklagerung (5) gerichteter Federbelastung (20, 32) über nach Art einer Konuskupplung axial und radial wirkende Mittel (16, 19) selbstzentrierend und spielfrei an dem glatte Lagerflächen aufweisenden Schaftteil (11) des die Schwenklagerachse bildenden Niet- oder Schraubenbolzens (9, 21, 27) gelagert ist.

2. Türfeststeller nach Anspruch 1, dadurch gekennzeichnet, daß die axial und radial wirkenden Mittel (16, 19) zur spielfreien Schwenklagerung der Türhaltestange (6) durch wechselseitig an deren Augenbohrung (17) und am Schaftteil (11) des Niet- oder Schraubenbolzens (9, 21) ausgebildete konische Erweiterung (16, 19) gebildet sind.

3. Türfeststeller nach Anspruch 1 und 2, dadurch gekennzeichnet, daß sich die wechselseitig in der Augenbohrung (17) der Türhaltestange (6) und am Schaftteil (11) des Niet- oder Schraubenbolzens (9, 21, 41) ausgebildeten konischen Erweiterungen (16, 19) in axialer Richtung jeweils lediglich über einen Teil der Tiefe der Augenbohrung (17) der Türhaltestange (6) hin erstrecken.

4. Türfeststeller nach Anspruch 1 bis 3, dadurch gekennzeichnet, daß in Verbindung mit der Anordnung einer zum Niet- oder Schraubenbolzenschaft (11) koaxial wirkenden Belastungsfeder (20) die axiale Länge der konischen Erweiterung der Augenbohrung (17) der Türhaltestange (6) kleiner ist, als der maximale Federweg der Belastungsfeder (20, 32).

5. Türfeststeller nach Anspruch 1 bis 4, dadurch gekennzeichnet, daß die konische Erweiterung (16, 42) des Schaftteiles des Niet- oder Schraubenbolzens (9, 21, 41) an dessen Kopf (10) anschließend und in axialer Richtung länger ausgebildet ist, als die zugehörige Erweiterung (19) in der Augenbohrung (17) der Türhaltestange.

6. Türfeststeller nach Anspruch 1 bis 5, dadurch gekennzeichnet, daß die Belastungsfeder (20, 32) unter Abstützung gegen den Träger (4) oder einen Lagerarm (30) eines Lagerbockes (29) an der konischen Erweiterung (19) der Augenbohrung (17) gegenüberliegendern Seitenfläche der Türhaltestange (6) angreift.

7. Türfeststeller nach Anspruch 1 bis 6, dadurch gekennzeichnet, daß die Belastungsfeder (20) als Tellerfeder ausgebildet ist.

8. Türfeststeller nach Anspruch 1 bis 7, dadurch gekennzeichnet, daß der Schaftteil (11) des Nietbolzens (9) als Bundschaft ausgebildet ist und mit seinem im Durchmesser verringerten Längenteil eine in den Träger (4) vorhergehend eingenietete eine Führung für die als Tellerfeder (20) ausgebildete Belastungsfeder bildende Buchse (26) durchsetzt.

9. Türfeststeller nach Anspruch 1 bis 6, dadurch gekennzeichnet, daß anstelle eines Nietbolzens ein Schraubenbolzen (21) vorgesehen ist, der als Bundbolzen ausgebildet und mittels einer Schraubenmutter (23) gegen den Träger (14) verspannt sowie mittels einer Umfangsprofilierung (25) drehsicher in der Bohrung (24) des Trägers (4) festgelegt ist.

10. Türfeststeller nach Anspruch 1 bis 6, dadurch gekennzeichnet, daß in Verbindung mit einem zwei die Türhaltestange (6) zwischen sich aufnehmende Lagerarme (30, 31) aufweisenden Lagerbock (29) die Belastungsfeder als Klammerfeder (32) ausgebildet und deren Federarm (34) der konischen Erweiterung (19) der Augenbohrung (17) der Türhaltestange (6) gegenüberliegend angeordnet und gegen den einen Lagerarm (30) des Lagerbockes (29) abgestützt ist.

11. Türfeststeller nach Anspruch 1, dadurch gekennzeichnet, daß einer zu deren Augenbohrung (17) konzentrischen kalottenförmigen Ausnehmung (36) in der einen Seitenfläche der Türhaltestange (6) eine am Kopf (10) des einen zylindrischen Schaftteil (11) aufweisenden Niet- oder Schraubenbolzens (9) abgestützte und zentrierte gewölbte Tellerfeder (37) zugeordnet ist.

12. Türfeststeller nach Anspruch 1 bis 3, dadurch gekennzeichnet, daß zwei die Türhaltestange (6) zwischen sich aufnehmende Lagerarme (39, 40) eines Lagerbockes (38) mittels einer über eine konische Erweiterung (19) der Augenbohrung (17) der Türhaltestange (6) im Eingriff stehenden Schraubenbolzens (49) gegen die einander gegenüberliegenden Seitenflächen der Türhaltestange (6) verspannt sind.

13. Türfeststeller nach Anspruch 12, dadurch gekennzeichnet, daß die beiden Lagerarme (39, 40) des Lagerbockes (38) jeweils ein halbkreisförmiges Querschnittsprofil aufweisen.

## Claims

1. A door stay, particularly for motor vehicle doors, with, pivotally mounted on a part of a door arrangement, a door or a door pillar and traversing a support housing (8) on the other door arrangement part, a door-holding bar (6) provided over its length with bulges (7) projecting transversely to its longitudinal direction and in which the door-holding bar (6) is cantilever mounted by means of a rivet or screw bolt (9) on a carrier (4) formed by a one-piece moulded part and fixed on a part of the door arrangement, the door-holding bar (6) being spring-loaded coaxially in respect of its pivot mounting by a spring (20) biased against the head (10) of the rivet or screw bolt, the rivet or screw bolt being non-rotatably secured in a bore in the carrier (4), the door-holding bar (6) under a spring-loading (20, 32) directed axially in relation to the pivot mounting (5), being mounted via means (16, 19) which act axially and radially after the manner of a cone clutch so that it is self-centring and clearance-free on the shank part (11) of the rivet or screw bolt (9, 21, 27) which forms the pivot bearing axis and which comprises smooth bearing surfaces.

2. A door stay according to Claim 1, characterised in that the axially and radially acting means (16, 19) for clearance-free pivot mounting of the door-holding bar (6) are formed by a conical widening (16, 17) constructed alternately on the bore (17) thereof and on the shank part (11) of the rivet or screw bolt (9, 21).

3. A door stay according to Claim 1 and 2, characterised in that the conical widenings (16, 19) constructed alternately in the bore (17) of the door-holding bar (6) and on the shank part (11) of the rivet or screw bolt (9, 21, 41) extend in an axial direction and in each case over a part of the depth of the bore (17) in the door-holding bar (6).

4. A door stay according to Claim 1 to 3, characterised in that in conjunction, with the arrangement of a loading spring (20) acting coaxially in respect of the rivet or screw bolt shank (11), the axial length of the conical widening of the bore (17) in the door-holding bar (6) is smaller than the maximum spring travel of the loading spring (20, 32).

5. A door stay according to Claim 1 to 4, characterised in that the conical widening (16, 42) of the shank part of the rivet or screw bolt (9, 21, 41) adjacent its head (10) is longer in an axial direction than the associated widening (19) in the bore (17) of the door-holding bar.

6. A door stay according to Claim 1 to 5, characterised in that the loading spring, (20, 32), while being biased against the carrier (4) or a bearing arm (30) of a bearing (29) engages the conical widened portion (19) on the lateral face of the door-holding bar (6) opposite the bore (17).

7. A door stay according to Claim 1 to 6, characterised in that the loading spring (20) is constructed as a plate spring.

8. A door stay according to Claim 1 to 7, characterised in that the shank part (11) of the rivet bolt (9) is constructed as a collar shank, the reduced-diameter portion of its length traversing a bush (26) which, previously riveted into the carrier (4), forms a guide for the loading spring which is constructed as a plate spring (20).

9. A door stay according to Claim 1 to 6, characterised in that instead of a rivet bolt a screw bolt (21) is provided which is constructed as a collar bolt and is tensioned by means of a screw nut (23) against the carrier (14) being rotationally rigidly secured in the bore (24) of the carrier (4) by means of a peripheral profiling (25).

10. A door stay according to Claim 1 to 6, characterised in that in conjunction with a bearing (29) having two bearing arms (30, 31) which accommodate the door-holding bar (6) between them, the loading spring is constructed as a clasp spring (32), its spring arm (34) being disposed opposite the conical widening (19) of the bore (17) in the door-holding bar (6) and being biased against one bearing arm (30) of the bearing (29).

11. A door stay according to Claim 1, characterised in that a convexly curved plate spring (37) centred and biased on the head (10) of a rivet or screw bolt having a cylindrical shank portion (11) is associated with a cup-shaped recess (34) in one side face of the door-holding bar (6) which is concentric with the bore (17).

12. A door stay according to Claim 1 to 3, characterised in that two bearing arms (39, 40) of a bearing (38) and which accommodate the door-holding bar (6) between them are clamped against the oppositely disposed side faces of the door-holding bar (6) by a screw bolt (49) which through a conical widening (19) engages the bore (17) in the door-holding bar (6).

13. A door stay according to Claim 12, characterised in that the two bearing arms (39, 40) of the bearing (38) each have a semi-circular cross-sectional profile.

**Revendications**

1. Arrêtoir de porte, en particulier pour portes de véhicules automobiles, comportant une barre d'arrêt (6) qui:
   - est fixée en étant articulée sur l'une des parties de la porte, savoir le montant de porte ou la porte elle-même,
   - traverse un boîtier de retenue (8) disposé sur l'autre partie de la porte,
   - présente des saillies (7) disposées sur sa longueur, perpendiculaires à son axe longitudinal,
   - est articulé en porte à faux, grâce à un boulon rivé ou fileté, sur un support (4) constitué d'un préformé en une seule pièce et fixé sur l'une des parties de la porte,
   - subit coaxialement à son articulation la pression d'un ressort (20) s'appuyant sur la tête (10) du boulon rivé ou fileté, fixé sans possibilité de rotation dans un alésage du support (4),
   *caractérisé en ce que* la barre d'arrêt (6) qui subit la pression d'un ressort (20), (32), axialement par rapport à l'articulation (5), est assemblée sans jeu et avec autocentrage avec le segment de tige (11) à surface lisse du boulon rivé ou fileté (9), (21), (27) constituant l'articulation (5), par l'intermédiaire de moyens (16), (19) agissant axialement et radialement à la manière d'un embrayage à cône.

2. Arrêtoir de porte selon la revendication 1 *caractérisé en ce que* les moyens (16), (19) à effet axial et radial destinés à assurer l'absence de jeu de l'articulation de la barre d'arrêt (6) sont constitués d'élargissements coniques (16), (19) réciproques prévus d'une part dans l'alésage (17) dans ladite barre d'arrêt et d'autre part sur le segment de tige (11) du boulon rivé ou fileté (9), (21).

3. Arrêtoir de porte selon les revendications 1 et 2 *caractérisé ence que* les élargissements coniques (16), (19) réciproques prévus dans l'alésage (17) de la barre d'arrêt (6) et sur le segment de tige (11) du boulon rivé ou fileté (9), (21), (41) ne s'étendent que sur une partie de la profondeur dudit alésage de la barre d'arrêt (6).

4. Arrêtoir de porte selon les revendications 1 à 3 *caractérisé en ce que* en liaison avec la disposition d'un ressort de compression (20) agissant coaxialement au segment de tige (11) du boulon rivé ou fileté. la hauteur axiale de l'élargissement conique de l'alésage (17) dans la barre d'arrêt (6) est plus petite que le trajet maximal de compression du ressort (20), (32).

5. Arrêtoir de porte selon les revendications 1 à 4 *caractérisé en ce que* la hauteur axiale de l'élargissement conique (16), (42) du segment de tige du boulon rivé ou fileté (9), (21), (41) prolongeant la tête (10) de ce dernier, est plus grande que celle de l'élargissement correspondant (19) de l'alésage (17) dans la barre d'arrêt (6).

6. Arrêtoir de porte selon les revendications 1 à 5 *caractérisé en ce que* le ressort de compression (20), (32) qui s'appuie sur le support (4) ou un bras (30) d'un support (29), prend appui sur la surface latérale de la barre d'arrêt (6), opposée à l'élargissement conique (19) de l'alésage (17) de celle-ci.

7. Arrêtoir de porte selon les revendications 1 à 6 *caractérisé en ce que* le ressort de compression (20) est constitué d'un ressort Belleville.

8. Arrêtoir de porte selon les revendications 1 à 7 *caractérisé en ce que* le segment de tige (11) du bouton rivé (9) comporte un collet et *en ce que* la partie longitudinale de la tige (11) à plus petit diamètre traverse un coussinet (26), rivé préalablement dans le support (4) et servant de guide au ressort de compression constitué d'un ressort Belleville.

9. Arrêtoir de porte selon les revendications 1 à 6 *caractérisé par* l'utilisation d'un bouton fileté (21) à la place d'un bouton rivé, qui comporte un collet, est serré par un écrou (23) contre le support (4) et est fixé sans possibilité de rotation dans l'alésage (24) du support (4) grâce à un profit périphérique (25).

10. Arrêtoir de porte selon les revendications 1 à 6 *caractérisé en ce que* en liaison avec un support (29) comportant deux bras (30), (31) entre lesquels est engagée la barre d'arrêt (6), le ressort de compression est constitué d'une pince élastique (32) dont la branche (34) est opposée à l'élargissement conique (19) de l'alésage (17) dans la barre d'arrêt (6) et s'appuie sur le bras (30) du support (29).

11. Arrêtoir de porte selon la revendication 1 *caractérisé en ce que* un ressort Belleville (37) centré et bombé qui s'appuie sur la tête (10) d'un bouton rivé ou fileté (9) comportant un segment de tige (11) cylindrique, coopère avec un évidement (36) en forme de calotte, prévu dans une des faces latérales de la barre d'arrêt (6), concentrique à l'alésage (17) de cette dernière.

12. Arrêtoir de porte selon les revendications 1 à 3 *caractérisé en ce que* les deux bras (39), (40) d'un support (38), entre lesquels est engagée la barre d'arrêt (6), sont serrés contre les faces latérales de la barre d'arrêt se faisant face, grâce à un bouton fileté (41) qui coopère avec l'élargissement conique (19) de l'alésage (17) dans la barre d'arrêt (6).

13. Arrêtoir de porte selon la revendication 12 *caractérisé en ce que* les deux bras (39), (40) du support (38) présentent une section transversale en forme de demi disque.

Figur 1

Figur 6

Figur 2

Figur 7

Figur 3

Figur 12

Figur 8

Figur 13

A

Figur 9

Figur 4

Figur 10

Figur 5

Figur 11